# EUROPEAN PATENT APPLICATION

(11) **EP 1 282 029 A2**
(43) Date of publication of application: **05.02.2003**
(21) Application number: 02255158.4
(22) Date of filing: 23.07.2002
(51) Int. Cl.: G06F 1/00

(54) **Method and apparatus for distributing electronic content**

(30) Priority: 31.07.2001 GB 0118582
(71) Applicant: Hewlett-Packard Company, A Delaware Corporation, Palo Alto, CA 94304 (US)
(72) Inventor: Rodgers, Peter James, Gloucestershire GL 12 7RE (GB); Williamson, Matthew Murray, Bristol BS6 5SJ (GB); Perry, Russel, Almondsbury, Bristol BS32 4EZ (GB)
(74) Representative: Lawrence, Richard Anthony

(57) **Abstract**

A method of distributing electronic content such as music or books via the internet involves transmitting licence data with the content. The licence data includes status information indicative of whether the licence is a full licence for content purchased from a content distributor, or temporary for content passed from a full licence owner to a new consumer who has not yet paid for the content. License status data is transmitted with or without content from one consumer to another. Connection to the internet allows the content management program to connect to the content distributor and transmit all stored licence status information. Detection of temporary licences by the content distributor triggers a request for payment of the content, and payment results in transmission of replacement licence data having a full licence status back to the consumer.

## Description

### Field of the Invention

This invention relates to a method and an apparatus for distributing electronic content, such as electronically stored music or literary works, for example.

### Background to the Invention

The commercial distribution of electronic content, such as electronically stored music or literary works, for example, traditionally takes place through retail outlets, such as record or book shops. Commercial distribution of electronic content over an information technology network has many advantages, but has not as yet been widely adopted by creators and commercial distributors of such content, largely because of fears relating to the resultant increase in potential ease with which such content may be illicitly reproduced, sold and distributed by third parties. For this reason, significant effort has been directed toward the development of technological safeguards which prevent unauthorised copying of electronic content. Traditionally, however, it has been found that any technological measure which prevents unauthorised copying is ultimately defeatable by parties who wish to produce pirate copies, which means that new technological safeguards must continually be developed and introduced.

For the purposes of the present specification, it should be appreciated that unauthorised copying of electronic content may, broadly speaking, be put into two categories, namely large-scale reproduction of content by a relatively small number of people and/or organisations for commercial purposes, and small-scale reproduction of content by a large number of individuals for private consumption. The former activity is typically performed by organised criminal parties for commercial purposes, and is therefore unlikely to be prevented by the continual introduction of increasingly complex technological measures, whereas the latter activity is of course primarily motivated by a desire to save money. A consequence of the motives for private copying is that with appropriate incentives, many people can be persuaded to acquire legal copies. An extreme example of this would be if such copies were available free of charge, as people would much rather own a legitimate copy of, for example, a record by one of their favourite performance artists than an illicit copy. Of course, this type of incentive is not a commercially viable proposition, but it does illustrate the fact that if appropriate incentives can be found and conveniently offered, while still remunerating the owner of the copyright in the electronic content, private illicit copying could be largely eradicated without having to resort to a solution based on the continual development of technological barriers to prevent copying (and, of course, the expense associated with such a strategy.

The present invention is intended to provide an alternative approach to the issue of dealing with unauthorised copying of electronic content by members of the public.

### Summary of the Invention

Thus, in accordance with a first aspect of the present invention, there is provided a method of distributing electronic content across an information technology network, comprising the steps of: a first consumer receiving a first copy of the content with first licence data, including status data indicative of the legitimate nature of the first copy, attached thereto; the first consumer storing the first copy of the content on a first storage apparatus associated with the first consumer; the first consumer generating second licence data for the content and transmitting the second licence data to a second storage device associated with a second consumer; the second consumer sending to a commercial distributor of the content via the information technology network at least sufficient of the second licence data to enable identification of: (a) the content to which it relates, and (b) the status of the second consumer with respect to the content; the second consumer meeting any conditions required by the commercial distributor for use of a copy of the content; and the commercial distributor sending to the second consumer replacement via the information technology network second licence data, including at least replacement status data to update said second licence data indicating that the second consumer is entitled to use the content.

In a first approach, a second copy of the content is provided to the second consumer with the second licence data, and said second licence data provided by the first consumer indicates that the second copy is a temporary copy, and said updated second licence data indicates that the second copy is a legitimately usable copy.

The method of the first approach provides a way of enabling consumers to share content with potential consumers, together with respective temporary licences. The existence of such temporary licences can be detected by the commercial distributor which then guides the potential consumers through the process of paying for a full licence. However, at present, the bandwidth of communication between devices such as personal digital assistants (PDA's), mobile telephones, etc. is relatively low, the process of sharing content using such devices may be too slow to give complete customer satisfaction.

In a second approach, a legitimately usable second copy of the content is provided to the second consumer by the commercial distributor together with said replacement second licence data.

The method of the second approach provides a way of sharing the licence for the content among one or more potential consumers, the shared licences can be detected by the commercial distributor which can then guide the potential consumers through the process of purchasing a copy of the content together with a licence therefor. This provides some advantages over the method of the first aspect of the present invention in the sense that only the licence data is distributed between the potential consumers, as opposed to full copies of the content, which licences require much less memory space and transmission capability.

In one preferred embodiment of the second approach, the second licence data may be attached to a sample portion of the content, for example, one track of a record or one or more chapters of a book, thereby giving the potential consumers receiving such sample content the opportunity to 'try before they buy'. Thus, for example, a user who has in their possession a piece of electronic content and a licence attesting to its legitimacy could email a licence (perhaps with a sample piece of the content) toa number of potential consumers ofthat content. Any of those consumers who wish to purchase a legitimate copy of the content can do so in a seamless manner by downloading it from the commercial distributor to their reading devices, following payment therefor to the commercial distributor.

In summary, the advantages of the second approach are considered to include:
- the harnessing of the power of peer-to-peer and similar networks for sharing/marketing content by recommendation and/or a 'try before you buy' policy;
- the obviation of the need for high bandwidth connections between peers for sharing (the licence data preferably comprises a relatively small data file, which is much quicker to share than a full copy of the content), although it does preferably require a relatively high bandwidth connection between the commercial distributor and its potential customers;
- by not actually sharing full copies of the content, but obtaining the bits directly from the commercial distributor, it is relatively easy for the distributor to ensure the authenticity of the content (thereby substantially eliminating the problems associated with hackers altering the content);
- even if the commercial distributor is so concerned with protecting their content that they choose to employ a Digital Rights Management (DRM) scheme to protect the bits, using the method of the second aspect of the present invention, the content can still be distributed (via licences and, optionally, samples of the content) while maintaining protection of the bits.

According to one preferred embodiment of either aspect of the invention, transactions between the first and second consumers on the one hand, and the commercial distributor on the other take place across an information technology network, such as the internet. By providing suitable identifiers and memory structure for the content sold and licences issued, the commercial distributor will be able to determine, upon receipt of the temporary licence data, from which full licence holder the content originated. In the event that the temporary licence holder chooses to purchase a copy of the content (thus converting the temporary licence into a full one) the commercial distributor is then able to reward the full licence holder responsible for transmitting the content. This provides one incentive for consumers to engage in a process of lawful purchase of content, while at the same time benefiting the commercial distributor who has an *ad hoc* sales force at their disposal.

In one exemplary embodiment of the first approach, when the commercial distributor receives information relating to the second (temporary) licence data enabling the identification of the content to which it relates, and the status of the second copy, it transmits to the second consumer an offer to purchase the second copy of the electronic copy. If the second consumer wishes to purchase the second copy, as stated above, they transmit their payment to the commercial distributor and the commercial distributor updates the second licence data accordingly. If, however, the second consumer does not wish to purchase a permanently legitimate copy of the content, the commercial distributor can delete the second copy from the second consumer's equipment. This still offers the second consumer the option to try the content before buying it (which provides the commercial distributor with a marketing tool), and still enables the retention of illegitimate copies of the content to be reduced, if not eliminated. Of course, the second consumer may transmit a third copy of the content, together with third (temporary) licence data attached, to a third consumer prior to the deletion of the content from the second consumer's equipment. In which case, the third consumer will also be given the option to purchase the content or have it deleted from their equipment.

Typically, in the case of both approaches, consumers will store content on personal portable storage devices, such as personal digital assistants (PDA's) or the like, one example of which is a PDA sold under the trademark "Jornada" by Hewlett-Packard Company. In one preferred embodiment, the commercial distributor operates a content store for each of a plurality of registered consumers, which operates as a type of back-up for copies of content. This provides the consumer with substantial flexibility in the way in which they wish to manage the electronic content for which they hold permanent legitimate licences. For example, it obviates the need for them to continuously retain a copy of each piece of content they have purchased, thus providing substantial savings in memory space required in, for example, their PDA's, and of course acts as another incentive for consumers to engage in the lawful purchase of electronic content.

In one preferred embodiment, retrieval of content from local storage (i.e. storage owned by the consumer), and its conversion into an assimilable form is managed by a content management program , which additionally automatically causes connection to the commercial distributor when triggered to do so by one or more predetermined events. One example of such an event is the connection of the PDA to the network, typically via a computer, whereupon the content management program dispatches all licence data to the commercial distributor for the distributor to vet for temporary licences or anomalies, such as licences with identification (ID) numbers which do not correspond with the records held by the commercial distributor against the content in respect of which they have been issued.

In a further aspect, the invention provides a method for a commercial distributor to regulate the distribution of electronic content across an information technology network comprising the steps of: providing across the information technology network to a first consumer a first copy of the content, and attaching to the first copy first licence data, including status data indicative of the legitimate nature of the first copy; receiving across the information technology network from a second consumer a portion of a second licence data relating to said content at least sufficient to enable identification of the content to which it relates; receiving across the information technology network notification that the second consumer meets any conditions required by the commercial distributor for use of a copy of the content; and sending across the information technology network to the second consumer replacement second licence data, including at least replacement status data to update said second licence data indicating that the second consumer is entitled to use the content.

In a further aspect, the invention provides a method for a first consumer of content to distribute electronic content to a second consumer, comprising the steps of: receiving on a computer associated with the first consumer a first copy of the content with first licence data, including status data indicative of the legitimate nature of the first copy, attached thereto; and generating with a processor of the computer second licence data for the content and transmitting the second licence data across an information technology network to a second consumer.

In a further aspect, the invention provides a method for a second consumer to acquire a license to use content acquired from a first consumer over an information technology network comprising the steps of: receiving from the first consumer at a computer associated with the second consumer over an information technology network second licence data for the content, the first consumer having a first copy of the content and first licence data for the content; sending to a commercial distributor over an information technology network of the content at least sufficient of the second licence data to enable identification of: (a) the content to which it relates, and (b) the status of the second consumer with respect to the content; meeting any conditions required by the commercial distributor for use of a copy of the content; and receiving over an information technology network from the commercial distributor replacement second licence data, including at least replacement status data whereby a processor of the computer associated with the second computer is able to update said second licence data indicating that the second consumer is entitled to use the content.

In a further aspect, the invention provides a data carrier having thereon a content management program for programming a processor of a consumer's computer, whereby the programmed processor is adapted to retrieve content having associated licence data from a storage device and upon satisfactory checking of the licence data, to convert the content into a form usable by the consumer, and is further adapted to provide new licence data for the content to a further consumer.

### Brief Description of the Drawings

Embodiments of the present invention will now be described by way of examples only and with reference to the accompanying drawings, in which:
Figure 1 is schematic representation of a commercial structure for the production and distribution of content to consumers;
Figure 2 is a schematic illustration of the architecture of the storage of a commercial distributor, and the transmission of content to a consumer;
Figure 3 is a schematic illustration of a computer and PDA adapted to manage electronic content; and
Figures 4 to 6 are schematic illustrations of further transactions.

### Detailed Description of the Invention

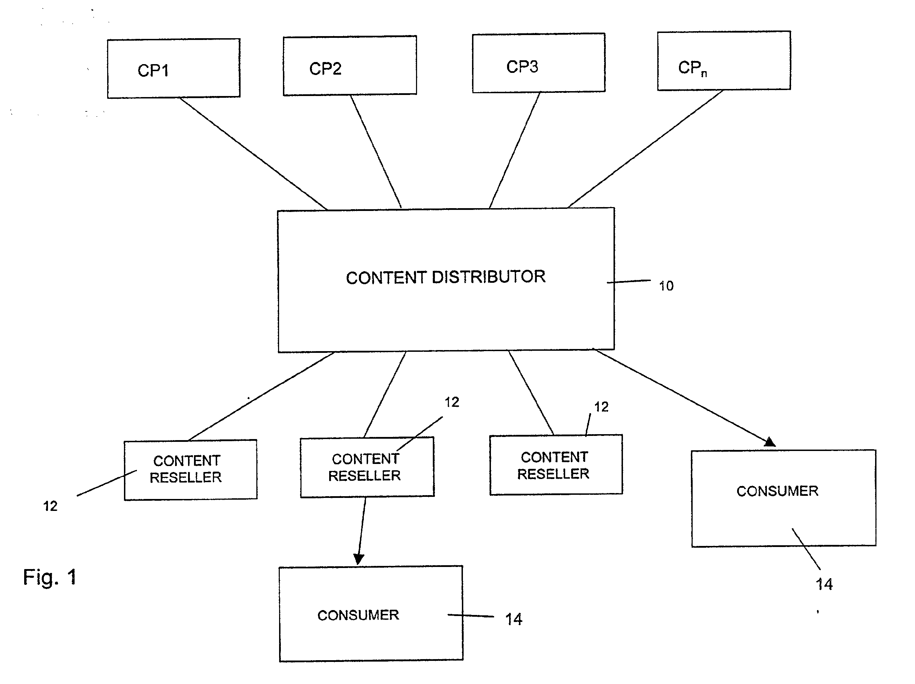

Referring to Figure 1 of the drawings, in the commercial model envisaged by the present invention, content, such as music, literary or dramatic works, films or other moving images, or indeed any artistic or other work whatsoever which is at some stage converted to electronic form to enable its consumption by a consumer (i.e. "electronic content") is created by Content Providers CP₁ to CPₙ. The Content Providers CP (which may vary from, for example, a recording artist of world renown to a previously unpublished author) distribute their content through a distributor 10 (such as a record company), who in turn uses content resellers 12 (such as record shops) to sell content to a consumer 14. In some cases, content may also be sold to consumers directly by the content distributor. Generically a person (whether natural or legal) who sells content for money or money's worth is known hereinafter as a commercial distributor, and this term is additionally intended to cover any person acting on behalf or for a commercial distributor (as are any of the other terms used in this specification in connection with parties who perform an act).

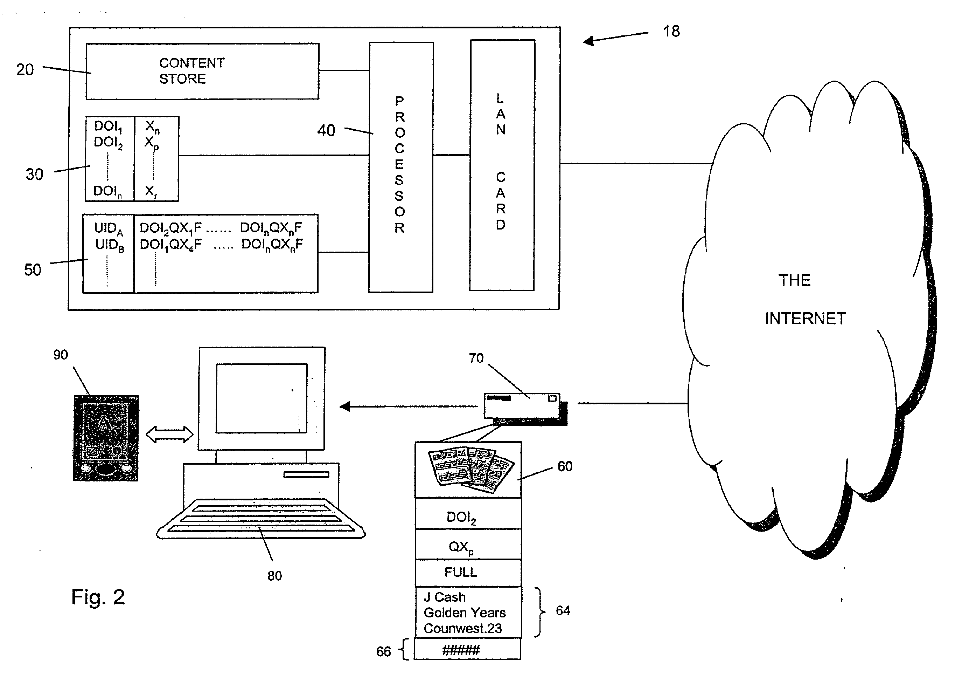

Referring to Figure 2 of the drawings, a commercial distributor Y stores, manages and distributes content from a server 18. The server 18 includes a first memory 20 in which content is stored, and each piece of content is indexed in the content store by an identifier, such as a Digital Object Identifier (or DOI), which is globally unique for a given piece of content. Thus all copies of a given piece of content share the same DOI, but different pieces of content will each have a different DOI. From the point of view of the commercial distributor Y it is desirable to keep a record of the number of copies of each piece of content that has been sold; using this information, the commercial distributor can keep track of which pieces of content are most popular with their customers. To this end, the server 18 of the commercial distributor Y has a further memory called the content ledger 30, which in the present example is simply a character or character string stored in connection with each DOI, and whose instantaneous value is representative of the number of copies of the content identified by the DOI which have been sold.

In the illustrated example, the content ledger 30 simply stores a number X against each DOI, where X is the number of copies sold. Upon conclusion of a sale of one or more copies of a given piece of content, the processor 40 of the commercial distributor increments the number X, stored against the DOI of the content which has been sold, by the number of copies sold. It follows therefore that if commercial distributor Y is the only authorised distributor of the content, then the character string DOIₙXᵣ, representing the sale to a particular customer of the Xᵣth copy of the content denoted by the identifier DOIₙ, will be globally unique. However, in virtually all cases, more than one commercial distributor offers a given piece of content, and it is thus possible that the same character string could be assigned to represent two different sales of the same piece of content by different commercial distributors (typically but not necessarily) to different consumers. Because it is desirable to assign a globally unique identifier to each sale, a further character or character string Q is added to the identifier DOIₙXᵣ to create a globally unique identifier DOIₙXᵣQ, where Q is a distributor identifier distinguishing commercial distributor Y from every other commercial distributor. This unique identifier DOIₙXᵣQ, thus not only identifies the articular purchase, but also the content which was the subject of the purchase and the distributor from which the content was purchased.

The identifier DOIₙXᵣQ is used in a third element of the memory architecture of server 18, known as the user licence directory 50, which is a record of each user registered with the commercial distributor Y, and for each user, a record of all content sold (and therefore licences granted) to that user. As can be seen in Figure 2, users are represented in the licence directory by a user identifier UID, against which a list of identifiers having the form DOIXQ are stored. Thus, for example, the user UID_{A} has purchased pieces of content for which licences identified by DOI₁X₂Q/F to DOIₙXᵣQ/F have been granted, while user UID_{B} has purchased a piece of content for which a licence identified by DOI₁X₄/F has been granted. The final character F is a licence status indicator, and indicates that the licences are full licences, as opposed to temporary ones which would be denoted by the character T.

Sale of a piece of content, for example the content denoted by DOI "DOI₂", which in the present example is a song by the artist Johnny Cash, takes place as follows. Once the commercial distributor Y has received either payment, or an undertaking to pay (e.g. the submission of credit card details) for the content from a consumer A, who in the present example is already registered with commercial distributor Y and has the user identification UID_{A}, the processor 40 retrieves a copy of the content store 20. This action automatically causes an incrementation of the number X stored in the content ledger 30 against DOI₂; in the present example, a single copy of DOI₂ has been retrieved, and so X is incremented by 1, to Xₚ. The user licence directory 50 is then updated to reflect the purchase of DOI₂ by UID_{A}, by adding a record to the directory comprising the user licence identifier DOI₂QXₚ/F; the Xₚth copy of content DOI₂ sold by commercial distributor Q with a full licence (F). Henceforth, therefore, user licence directory 50 will enable commercial distributor Y to determine that user UID_{A} has purchased a copy of DOI₂. In a further modification, the user licence directory will also store the time at which the update was made.

Following the update of the user licence directory, the user licence identifier DOI₂QXₚ/F, together with metadata 64 (in this example, the title of the artist, the name of the song, and filename of the file in the content store 20), and a further identifier 66 known as a hash, which together comprise the complete licence data set, are bundled into a message 70 together with content 60. The hash provides a further security measure to ensure that the content is genuinely what it purports to be, and is a character string generated by processing the content itself through a known program. One analogy for the hash is the chassis number on a vehicle ostensibly identified perfectly adequately through the number of the licence plate which is clearly externally visible. The message 70 is then sent via the network, which in the present example is the internet, to the consumer A (whose user ID with commercial distributor Y is UID_{A}), who downloads the new content 60, and licence data 62 from a desktop computer 80 to a personal digital assistant (PDA) 90.

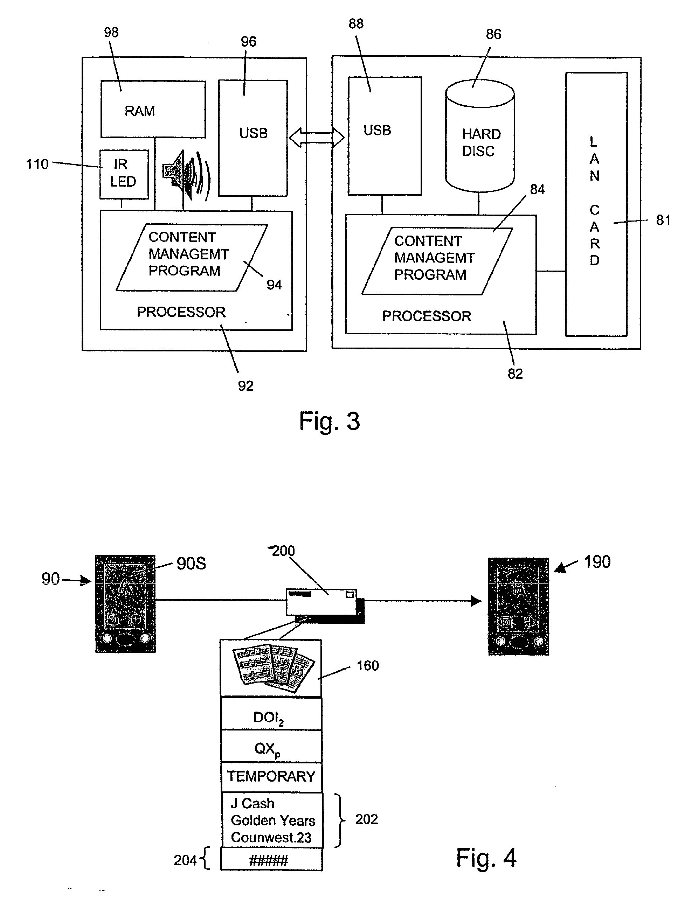

Referring now to Figure 3 of the drawings, the computer 80 is connected to the internet via a LAN card 81, and includes a processor 82 which runs a content management program 84. Within the computer 80, the content management program 84 stores and retrieves content on hard disc storage 86, and transmits content to the PDA 90 via a serial bus 88. The PDA likewise includes a processor 92, on which a further copy of the content management program 94 runs, and the processor 92 is connected to the computer via serial port 96, and also to an addressable memory 98. Within the PDA, the content management program 94 stores and retrieves content from the addressable memory, and converts it to a form assimilable by the consumer, which in the present example (i.e. in the case of music) is then sent to a loudspeaker 100 within the PDA. The PDA also has a wireless output 110, typically either Bluetooth or infrared, which enables messages to be beamed over short distances to other PDAs.

While both the computer and the PDA management programs 84, 94 store and retrieve both licence data, for speed and economy of data processing content is only retrieved for consumption by a consumer, and transmitted between the computer 80 and PDA 90 when it is to be stored in memory that does not already contain a copy of the content. All other management activities are performed using the licence data, this being a relatively small amount of data. The two content management programs 84, 94 are adapted to synchronise their activities. Thus, for example, upon connection or "docking of the PDA to the computer, the PDA content management application 94 is adapted to retrieve all licence data stored in the memory 98 and to send this to the computer 80 via the serial port 96. When the computer content management application 84 receives such licence data, it is adapted to perform a reconciliation operation, comparing the licence data received from the PDA with the licence data stored within the hard disc storage 86. In the event that new licence data has been transmitted to the computer 80 from the PDA, the computer content management application 84 updates the licence data retained on the hard disc 86 by adding to the hard disc any licence data not already there, and then, in the case of the first aspect of the present invention, instructs the PDA content management program 94 to retrieve and send to the computer 80 copies of all content in respect of which new licences have been stored on the computer hard disc 86. Of course, this step is obviated by the method and apparatus of the second aspect of the present invention, in which only licence data (and possibly samples of the respective content) is shared among users.

The computer content management program 84 is also adapted to automatically connect to the commercial distributor Y, in this example via the internet, upon docking of the PDA to the computer, and to retrieve and send to the commercial distributor all licence data currently held on the hard disc storage 86. Preferably, all management activities described above of both content management programs 84, 94 are invisible to the user.

Referring to Figure 4, in accordance with the method and apparatus of the first aspect of the present invention, content may be legitimately passed directly from one consumer to another, typically using the wireless port 110. To transmit a copy of a piece of content to another consumer using a PDA, a consumer "A" instructs the content management program running in PDA 90, via a graphical user interface on the screen 90S of the PDA to beam a copy of a specified piece of content. Upon receipt ofthis instruction, the content management program running in the PDA 90 retrieves a copy of the content 160, prepares licence data for that content, which in this case includes the licence identifier DOI₂QXₚ/T (the "T" denoting a temporary licence status), metadata 202 and the hash 204 for the content, and bundles both into a message 200 which is then transmitted via the wireless port 110 to the PDA 190 of a consumer B. In the present example, a copy of the content management program is already running on the PDA 190 of consumer B. However, the content management application is also adapted to transmit a copy of itself to the PDA of consumer B upon instruction from consumer A, and this would occur prior to the transmission of any content.

In the case of the second aspect of the present invention, upon instruction by the consumer A, the content management application running in the PDA 90 prepares licence data relating to content data which consumer A wishes to recommend to consumer B, the licence data once again including the licence identifier DOI₂QXₚ/T, and bundles the licence data together with metadata 202 identifying the content in question into a message 200 which is then transmitted via the wireless port 110 to the PDA 190 of consumer B. In one embodiment of the second aspect of the present invention, a sample portion of the content 160 may also be included in the message 200 transmitted to consumer B's PDA 190.

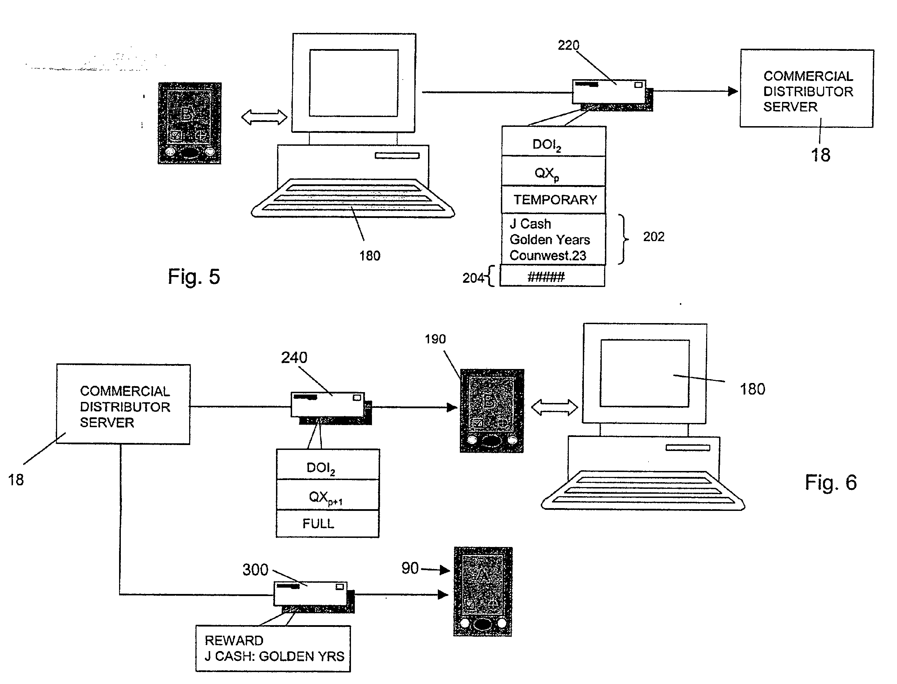

Referring to Figure 5, once again in the case of the first aspect of the present invention, consumer B is now able to consume the content transmitted from consumer A, even though he has not paid for it. When consumer B docks his PDA 190 to the computer 180, the content management programs in the PDA and computer perform the transmission, reconciliation and storage updating operations described above in relation to the licence data and content, causing *inter alia* re-transmission of the message 200 from the PDA to the computer 180. Docking of the PDA 190 with the computer also causes the content management program to connect via the network to the server 18 of the commercial distributor Y, whereupon all the stored licence data held by the computer 180 of consumer B, including that relating to the content beamed to consumer B from consumer A, is sent to the commercial distributor Y, together with user identification UID_{B} of consumer B. Illustrated in Figure 5 is the transmission of message 220, containing the licence data in respect of content acquired from user A; the further licence data which would be transmitted is omitted for the sake of clarity.

In the case of the second aspect of the present invention, the above-described procedure is also followed when consumer B docks his PDA 190 to the computer 180, irrespective of whether consumer A transmitted just licence data or licence data together with a sample portion of the content to which it relates to consumer B.

In the case of both the first and second aspects of the present invention, upon receipt of the licence data sent by computer 180, the server of commercial distributor Y performs a reconciliation operation, comparing the licence data received with the licence data which is held in the user licence directory 50 against user identification UID_{B}. In the event that the licence data received from computer 180 is identical to that currently held in the user licence directory 50, no further action is needed. If, however, the licence data differs, there are generally two possible outcomes. In the first event, the received licence data differs in that there is a licence having a full status (denoted by the status identifier "F") of which there is no record in the user licence directory 50. In this situation, the unaccounted licence is treated as a rogue licence, and the consumer may be sent instructions to delete the licence data and any corresponding content (or this deletion process may be carried out remotely by the commercial distributor Y). The consumer is then asked if they wish to purchase a genuine copy of the content. A more common outcome of the reconciliation process is that of the present example, where a licence having a temporary status T is found; in the present example, the licence identifier DOI₂QXₚ/T. In this case, the commercial distributor saves a copy of the licence identifier in a temporary cache, and then sends an invitation to the consumer to purchase a genuine copy of the content.

Referring to Figures 2 and 6 of the drawings, if the consumer agrees, and payment is sent to the commercial distributor, the processor of the server 18 increments the number X stored in the content ledger 30 against the DOI of the content, in this example DOI₂, by one, and adds the new licence identifier DOI₂QXₚ₊₁/F, which is unique to this transaction, to the list of user licence identifiers held against the user identifier UID_{B} in the user licence directory 50. The consumer B is then sent an updated licence identifier DOI₂QXₚ₊₁/F (the F now being indicative of a full licence status), and a full copy of the content in the case of the second aspect of the present invention, in a message 240, and the content management programs 84, 94 in the computer 80 and the PDA 90 respectively then substitute the updated licence identifier for the temporary licence identifier.

In the event that the consumer does not agree to pay for the content, the server then asks the consumer if they wish to delete any illegitimate content from their local storage, in this case their PDA and computer. If the user agrees (for example, because he does not like the music which he has received and therefore does not want to pay for it), the server communicates with the content management programs and instructs them to delete all copies of that content and all licence data related to it. If the user does not wish to pay, and does not wish to delete any content which has not been paid for, the server 18 operates to deny the user access to their personal content store (described in more detail below) and, possibly following a further warning, deletes all the content in their store, all licence identifiers in their user licence directory, and cancels their user registration.

Once the transaction with consumer B is concluded, and assuming that consumer B has paid for the content, the processor 40 of the server 18 then retrieves the temporary licence identifier DOI₂QXₚ/T from the cache, and searches the user licence directory 50 to find the user identifier against which the character string DOI₂QXₚ is stored (since as explained above, this character string is globally unique to a particular transaction with the commercial distributor Y). Once the user identifier UID_{A} (the user ID of consumer A) against which DOI₂QXₚ is stored is located, the processor then sends a message 300 to consumer A including reward points or the like, typically redeemable against further content when sufficient points have been accumulated, and the metadata 202 of the content the consumer is being rewarded for transmitting.

In a further development, the commercial distributor provides further reward to a consumer in the event that they transmit a copy of the content management program to a consumer who then registers as a user with the commercial distributor.

A further incentive of registering with the commercial distributor, and therefore engaging in the lawful purchase and ownership of content is the ability to manage content in a more flexible manner as a result of having access to a personal content store held in the server by the commercial distributor on behalf of each of its users, in which all of the content owned by the user is stored. This obviates the need for the user to have to store personally (including the necessity of providing back-up contingency) all content which he or she owns, so that instead the consumer may retrieve from the personal content store held by the server, those pieces of content which they require over any period of time.

Content and messages containing content are typically constructed using Simple Object Access Protocol ("SOAP"), which is known *per se* and which will therefore not be discussed further, and transmitted using Hyper-Text Transfer Protocol, widely known as "http".

As mentioned above, references in this specification to an act performed by a party is intended to include within its scope the performance of that act by another party on behalf of the first party. References to the sending of data is intended to include where appropriate the sending of a copy of the aforementioned data.

In the foregoing specification, the invention has been described with reference to specific exemplary embodiments thereof. It will, however, be apparent to a person skilled in the art that various modifications and changes may be made thereto without departing from the broader spirit and scope of the invention as set forth in the appended claims. Accordingly, the specification and drawings are to be regarded in an illustrative, rather than a restrictive, sense.

## Claims

1. A method of distributing electronic content across an information technology network, comprising the steps of:
(i) a first consumer receiving a first copy of the content with first licence data, including status data indicative of the legitimate nature of the first copy, attached thereto;
(ii) the first consumer storing the first copy of the content on a first storage apparatus associated with the first consumer;
(ii) the first consumer generating second licence data for the content and transmitting the second licence data to a second storage device associated with a second consumer;
(iii) the second consumer sending to a commercial distributor of the content via the information technology network at least sufficient ofthe second licence data to enable identification of: (a) the content to which it relates, and (b) the status of the second consumer with respect to the content;
(iv) the second consumer meeting any conditions required by the commercial distributor for use of a copy of the content; and
(v) the commercial distributor sending to the second consumer replacement via the information technology network second licence data, including at least replacement status data to update said second licence data indicating that the second consumer is entitled to use the content.

2. A method as claimed in claim 1, wherein a second copy of the content is provided to the second consumer with the second licence data, and wherein said second licence data provided by the first consumer indicates that the second copy is a temporary copy, and wherein said updated second licence data indicates that the second copy is a legitimately usable copy.

3. A method as claimed in claim 1, wherein a legitimately usable second copy of the content is provided to the second consumer by the commercial distributor together with said replacement second licence data.

4. A method according to any preceding claim, further comprising the step, upon connection of the second consumer to commercial distributor via the network, of registering the second consumer with the commercial distributor, and providing to the second customer as a consequence of registration, the ability to store, on electronic storage of the commercial distributor, copies of all content legitimately owned by the second consumer.

5. A method according to claim 4, wherein registration entitles the second consumer to receive a reward in the event that the second consumer transmits a further copy of the content or second licence data to a further consumer and the further consumer then pays the commercial distributor for the further copy.

6. A method according to any preceding claim, wherein the first and second storage apparatus are adapted to run a content management program which retrieves content from storage and converts it into an assimilable form for the first and second consumers, the method further comprising the step of copying the content management program in the possession of the first consumer, and transmitting the copy of the program to the second storage apparatus.

7. A method according to any of claims 1 to 5, wherein the first and second storage apparatus are adapted to run a content management program which retrieves content from storage and converts it into an assimilable form for the first and second consumers, and wherein the content management program is adapted automatically upon connection of the second storage apparatus to the network to send to the commercial distributor of the content, via network, at least sufficient of the second licence data to enable identification of: (a) the content to which it relates, and (b) the status of the second copy.

8. A method according to claim 7, wherein the second storage apparatus connects to the network via a computer.

9. A method according to any preceding claim, wherein the first licence data includes a first identifier unique to the first consumer and the content purchased from the commercial distributor in the first sale.

10. A method according to claim 9, wherein the second licence data includes the first identifier.

11. A method according to claim 10, wherein the second licence data sent by the second consumer to the commercial distributor includes the first identifier.

12. A method according to claim 11, wherein the replacement second licence data includes a second identifier unique to the second consumer and the content purchased from the commercial distributor in the sale of the second copy of the content to the second consumer.

13. A method according to claim 12, wherein the first unique identifier is used by the commercial distributor as an indication that the second copy of the content was transmitted to the second consumer by the first consumer.

14. A method according to claim 13, further comprising the step, subsequent to receipt of payment for the second copy of the content, of the commercial distributor rewarding the first consumer.

15. A method according to claim 6 or claim 7, wherein the second storage apparatus comprises a licence cache controlled by the content management application, and in which data for each licence acquired by the second consumer is stored, the method further comprising the step, performed by the content management program upon connection of the second storage apparatus to the network, of sending to the commercial distributor, in respect of each licence in the licence cache, at least sufficient of the licence data to enable identification of: (a) the content to which it relates, and (b) the status of the second copy.

16. A method according to any preceding claim, further comprising the step of the commercial distributor comparing the licence data received from the second consumer with licence data stored by the commercial distributor for the second consumer to determine whether there are any inconsistencies.

17. A method for a commercial distributor to regulate the distribution of electronic content across an information technology network comprising the steps of:
(i) providing across the information technology network to a first consumer a first copy of the content, and attaching to the first copy first licence data, including status data indicative of the legitimate nature of the first copy;
(ii) receiving across the information technology network from a second consumer a portion of a second licence data relating to said content at least sufficient to enable identification of the content to which it relates;
(iii) receiving across the information technology network notification that the second consumer meets any conditions required by the commercial distributor for use of a copy of the content; and
(v) sending across the information technology network to the second consumer replacement second licence data, including at least replacement status data to update said second licence data indicating that the second consumer is entitled to use the content.

18. A method as claimed in claim 17, wherein the step of sending to the second consumer replacement licence data further comprises sending to the second consumer a usable copy of the content.

19. A method as claimed in claim 17 or claim 18, further comprising prior to the step of receiving from a second consumer a portion of a second licence data providing to the first consumer a content management program whereby use of the content management program is necessary for the first consumer to read or copy the first copy of the content.

20. A method according to any of claims 17 to 19, further comprising the step of registering the second consumer, and providing to the second customer as a consequence of registration, the ability to store copies of all content legitimately owned by the second consumer on electronic storage of the commercial distributor.

21. A method according to any of claims 17 to 20, wherein the first licence data includes a first identifier unique to the first consumer.

22. A method according to claim 21, wherein the first unique identifier is included in the second licence data and is used by the commercial distributor as an indication that the second copy of the content or the second licence data was transmitted to the second consumer by the first consumer.

23. A method for a first consumer of content to distribute electronic content to a second consumer, comprising the steps of:
(i) receiving on a computer associated with the first consumer a first copy of the content with first licence data, including status data indicative of the legitimate nature of the first copy, attached thereto; and
(ii) generating with a processor of the computer second licence data for the content and transmitting the second licence data across an information technology network to a second consumer.

24. A method as claimed in claim 23, wherein the information technology network is a wireless communication network.

25. A method as claimed in claim 23 or claim 24, wherein the second licence data indicates that the second consumer has not been sent a full second copy of the content.

26. A method as claimed in claim 23 or claim 24 further comprising sending the second consumer a second copy of the content with the second licence data, wherein the second licence data indicates that the second consumer has been sent a second copy of the data.

27. A method as claimed in any of claims 23 to 26, wherein the first copy is stored in electronic form on a first storage device associated with the processor, which is programmed with a content management program to be adapted to retrieve the content from storage and convert the content into an assimilable form for the first consumer.

28. A method according to claim 27, wherein transmission of the second licence data from the first consumer to the second consumer occurs by transmitting a copy of the content or licence data from the first storage device to a second storage device controlled by the second consumer.

29. A method according to claim 27 or claim 28, further comprising the step of copying the content management program, and sending a copy of the program from the first consumer to the second consumer.

30. A method according to any of claims 23 to 29, wherein the first licence data includes a first identifier unique to the first consumer and the content obtained from the commercial distributor.

31. A method according to claim 30, wherein the second licence data includes the first identifier.

32. A method according to claim 25, wherein said second licence data transmitted from the first consumer to the second consumer is attached to or included in a sample portion of said first copy of said content.

33. A method for a second consumer to acquire a license to use content acquired from a first consumer over an information technology network comprising the steps of:
(i) receiving from the first consumer at a computer associated with the second consumer over an information technology network second licence data for the content, the first consumer having a first copy of the content and first licence data for the content;
(iii) sending to a commercial distributor over an information technology network of the content at least sufficient of the second licence data to enable identification of: (a) the content to which it relates, and (b) the status of the second consumer with respect to the content;
(iv) meeting any conditions required by the commercial distributor for use of a copy of the content; and
(v) receiving over an information technology network from the commercial distributor replacement second licence data, including at least replacement status data whereby a processor of the computer associated with the second computer is able to update said second licence data indicating that the second consumer is entitled to use the content.

34. A method as claimed in claim 33, further comprising receiving a second copy of the content with the second licence data.

35. A method as claimed in claim 33, further comprising receiving a second copy of the data with the replacement second licence data.

36. A method as claimed in claim any of claims 33 to 35, further comprising storing said second copy on a storage device associated with the processor, which is programmed with a content management program adapted to retrieve the content from storage and convert the content into an assimilable form for the second consumer.

37. A method as claimed in claim 36, wherein the content management program is received from the first consumer.

38. A method according to claim 36, wherein the step of sending to the commercial distributor at least part of the second licence data is performed automatically upon connection of the storage device to the information technoloyg network.

39. A method according to claim 36, wherein the step of sending to the commercial distributor at least part of the second licence data is initiated by the content management program.

40. A method according to any of claims 33 to 39, further comprising the step of the second consumer registering with the commercial distributor, and receiving as a consequence of registration, the ability to store copies of all content legitimately owned by the second consumer on electronic storage of the commercial distributor.

41. A method according to any of claims 33 to 40, wherein the second licence data sent by the second consumer to the commercial distributor includes a first identifier unique to the first consumer.

42. A method according to claim 41, wherein the replacement second licence data includes a second identifier unique to the second consumer.

43. A data carrier having thereon a content management program for programming a processor of a consumer's computer, whereby the programmed processor is adapted to retrieve content having associated licence data from a storage device and upon satisfactory checking of the licence data, to convert the content into a form usable by the consumer, and is further adapted to provide new licence data for the content to a further consumer.

44. A data carrier as claimed in claim 43, wherein the programmed processor is further adapted to provide a second copy of the content to the further consumer with the new licence data.

45. A data carrier as claimed in claim 43, wherein the programmed processor is further adapted to send to a commercial distributor a portion of new licence data received from another consumer at least sufficient to enable identification of: (a) the content to which it relates, and (b) the status of the consumer with respect to the content.

46. A data carrier as claimed in claim 45, wherein the programmed processor is further adapted to register the consumer with the commercial distributor.

47. A data carrier as claimed in claim 45 or claim 46, wherein the programmed processor is further adapted to receive from the commercial distributor replacement new licence data, including at least replacement status data with which the programmed processor is adapted to update said new licence data indicating that the consumer is entitled to use the content.

48. A data carrier as claimed in claim any of claims 43 to 47, wherein the new licence data includes a first identifier present in the associated license data and uniquely identifying the consumer.

49. A data carrier as claimed in any of claims 45 to 47, wherein the portion of the new licence data sent by the second consumer to the commercial distributor includes a first identifier included in the new licence data and uniquely identifying the another consumer.

50. A data carrier according to claim 47, wherein the replacement new licence data includes a second identifier unique to the second consumer.

51. A data carrier according to claim 43, whereby the programmed processor is adapted to provide with the new licence a sample portion of said content.
